Europäisches Patentamt

European Patent Office

Office européen des brevets

(19)

(11) Publication number: **0 220 647**
**A1**

## (12) EUROPEAN PATENT APPLICATION

(21) Application number: **86114514.2**

(22) Date of filing: **20.10.86**

(51) Int. Cl.⁴: **C02F 11/00 , C02F 3/28 , C02F 9/00**

(30) Priority: **25.10.85 US 791186**

(43) Date of publication of application:
**06.05.87 Bulletin 87/19**

(84) Designated Contracting States:
**AT BE CH DE FR GB IT LI LU NL SE**

(71) Applicant: **Erickson, Lennart G.**
**100 South Ellsworth Avenue Suite 807**
**San Mateo, Cal.(US)**
Applicant: **Worne, Howard E.**
**205 Sunny Jim Drive**
**Medford, N.J. 08055(US)**

(72) Inventor: **Erickson, Lennard G.**
**100 South Ellswoth Avenue Suite 807**
**San Mateo California 94401(US)**
Inventor: **Worne, Howard F.**
**205 Sunny Jim Drive**
**Medford New Jersey 08055(US)**

(74) Representative: **Reitzner, Bruno, Dr.**
**Patentanwälte Dipl.-Ing. R. Splanemann Dr.**
**B. Reitzner Tal 13**
**D-8000 München 2(DE)**

(54) **Sludge restructuring and conversion method.**

(57) A method is described for the restructuring of digester sludge and other raw sludges to remove biologically inert matter and to anaerobically convert the remaining solids into digester gas containing an increased volume of methane. Digester sludge residue (13) is treated to remove excess effluent (14) and is then restructured (with hydrolytic enzymes (19), alkaline hydrolysis and insolubilization of heavy metals (23)) to reduce solids to soluble and microparticulate form and to remove residual solids (26). The resultant nutrient BioFeedstock is recycled (30) back to the digester (11) for conversion into additional digester gas. The raw sludge inflow (33) to this interactive restructuring-conversion process may be supplied either directly (35) to the digester or may be restructured into BioFeedstock form prior to digestion (34). The residual solids may be removed as a recyclable organic fibrous concentrate (27) and a granular solids concentrate (28). The granular solids may be refined to recover individual metals.

EP 0 220 647 A1

RAW SLUDGE
FROM
FIG. 2
33

35                                                    34

EFFLUENT
15

DIGESTER
GAS                          DIGESTER        14
                             EFFLUENT
12        13                 REMOVAL     16        34

                                                  17

                                          PARTICULATE SIZE      18
                             11           REDUCTION

                    ENZYMES                                     19
                                          ENZYME
                    20                    HYDROLYSIS

ANAEROBIC           CAUSTIC                                     21
DIGESTER                                  ALKALINE
                    22                    HYDROLYSIS

                    ACID                                        23
35                                        METALS
                    24                    INSOLUBILIZATION

                    CHELATE
                        29
                                                       25
                    RESIDUAL
                    SOLIDS
              30    REMOVAL      26

              31        28      27

                    GRANULAR    FIBROUS
                    SOLIDS      SOLIDS

                                    32

FIG. 1

## SLUDGE RESTRUCTURING AND CONVERSION METHOD

### BACKGROUND OF THE INVENTION

This invention relates to improvements to known methods of converting the biodegradable fraction of raw sludges into gaseous fuel. More particularly, it relates to the use of anaerobic digestion, enzyme hydrolysis and alkaline hydrolysis for processing of said sludges.

Environmental protection, waste disposal, waste recycling, and conversion of organic wastes into energy are subjects of public and official concerns reflected in the literature, including publications of the United States Environmental Protection Agency (EPA) and the United States Department of Energy.

Municipal Wastewater Sludge, removed in the purification of municipal wastewater in modern treatment plants, currently is produced at an annual rate of about 2,750 dry weight tons per 100,000 population. It usually includes a dilute mixture of primary and secondary treatment sludges containing about 30% inorganic and 70% organic matter. Usually, such raw sludge is stabilized by anaerobic digestion; a marginal amount of methane gas is produced; and the digester sludge residue is processed to waste disposal.

Usually about 50% of digester sludge is undigested organic matter and biologically fresh anaerobic microbial biomass. Coliform bacteria is present at typical concentrations of 30,000 to 6,000,000 per 100 milliliters, viral pathogens at 100-1,000 per 100 ml, and Salmonella at 3-62 per 100 ml. The parasite Ascaris Lumbricoides, however, survives digester treatment and is found in concentrations up to 1,000 per 100 ml.

U.S. government investigators report heavy metals in digester sludge from cities in the United States at the following median concentrations:

| | |
|---|---|
| Cadmium | 31 mg/kg |
| Chromium | 1,100 mg/kg |
| Cobalt | 100 mg/kg |
| Copper | 1,230 mg/kg |
| Lead | 830 mg/kg |
| Mercury | 6.6 mg/kg |
| Nickel | 410 mg/kg |
| Silver | 100 mg/kg |
| Zinc | 2,780 mg/kg |

The costs of dewatering and disposing of this volatile organic material in an ecologically acceptable way are more than $150.00 per dry weight ton in many areas of the United States. Agricultural usage is restricted by the content of toxic heavy metals and other constraints. Sludge production and the costs of sludge processing-to-disposal are expected to increase substantially during the next decade.

Concerns about toxic metals and pathogens are reflected in published reports and in proposed regulatory programs which the EPA considers necessary for compliance with the mandates of the United States Clean Water Act and Resource Conservation Act.

Municipal Solid Wastes (MSW) are the major source of biodegradable organic materials from urban areas, being produced at an annual rate of about 40,000 dry weight tons per 100,000 population. Also produced annually is about 20,000 tons of inorganic and nonbiodegradable material. Most of this material is currently disposed of in landfills; however, disposal costs are increasing because of a developing shortage of convenient disposal sites and the need to control seepage of effluents containing heavy metals and other toxins. MSW incineration is an alternative method of stabilization and energy recovery; however, in some areas it is unacceptable to discharge the products of combustion, which may include vaporized heavy metals and toxic organic compounds.

The energy potential of the 50% to 75% organic fraction of MSW is illustrated by the fact that part of this material converts to methane gas in the landfills by anaerobic bacterial decomposition. This results in the potentially hazardous seepage of gasses from such sites and the subsidence to ground surface levels. Recent technology is being applied at some of these MSW disposal sites to remove the gasses through wells and to refine the methane to fuel-gas quality.

DEFINITIONS

For purposes of this patent application, and unless otherwise indicated, terms used herein are defined as follows:

Wastewater Influent refers primarily to raw sewage wastewater acceptable as influent to conventional municipal wastewater treatment plants.

Wastewater Treatment includes all methods for removal of organic and inorganic solids from municipal wastewaters.

Wastewater Effluent is the water reclaimed from municipal wastewater treatment.

Wastewater Sludge refers primarily to an aqueous concentration of solids removed during municipal wastewater treatment, typically containing biodegradable organic matter and biologically inert materials, including heavy metals.

MSW Sludge is an aqueous concentration of organic matter comprising most of the biodegradable solids content of Municipal Solid Wastes, separated from inorganic materials by methods well known in the art. Such sludge may contain residual amounts of heavy metals.

Raw Sludge includes wastewater sludge, MSW sludge and any other aqueous sludge of predominantly biodegradable organic matter and usually includes biologically inert matter.

Biologically Degradable or Biodegradable matter is organic matter is particulate or soluble forms, comprising most of the solids in raw sludges.

Sludge Restructuring in the method of our invention is a combination of process steps including size reduction of particulates, enzyme hydrolysis, chemical hydrolysis, and chemical insolubilization of heavy metals.

Residual Solids are solids removed from restructured sludge, primarily including matter which is not biodegradable and the small portion of the original organic material which was resistant to restructuring or conversion into digester gas. Such solids include heavy metals, grit, ash, partially degraded organic fibers, and biodetritus.

BioFeedstock is the major intermediate product of our invention, containing most of the organic solids in process in readily biodegradable form.

Anaerobic Digester refers to all known types of digesters in which microbial metabolization in the absence of oxygen is used for conversion of biodegradable matter, including BioFeedstock, into Digester Gas containing Methane, a fuel gas.

Digester Sludge is an aqueous residue or anaerobic digestion and includes partially digested organic matter, a biomass of freshly grown anaerobic microorganisms, and a proportion of nonbiodegradable solids. This residue is recycled to the Sludge Restructuring process of our invention.

Digester Effluent (present with Digester Sludge) is primarily water containing any dissolved inorganic solids that may be present.

SUMMARY OF THE INVENTION

The method of this invention is adaptable to the recovery of resources by the onsite restructuring of wastewater sludges. The objectives are:

*to convert substantially all biodegradable matter into digester gas resulting in an increased volume of methane, and

*to reduce the waste sludge remaining after such treatment to an inert, easily dewatered concentrate of primarily inorganic solids.

The methods of this invention are adaptable to the enhanced recovery of energy from the biodegradable fraction of materials separated from municipal solid wastes. The objectives are:

*to convert this material into a nutrient BioFeedstock useful for production of digester gas containing methane, and

"to reduce the residual solids remaining after such treatment to relatively low volume concentrates.

The method of this invention includes the means for disintegrating conglomerate raw sludges into low molecular weight, nonagglomerated constituents, thus:

"to destroy viruses, bacteria, microorganisms, and other parasites; and

"to facilitate the removal of biologically inert matter in a form suitable for classification and segregation into its constituents. For instance, heavy metals may be concentrated in a condition suitable for refining to recover individual metals.

The resultant BioFeedstock of soluble and microparticulate nutrients may be metabolized relatively rapidly by the microorganisms in an anaerobic digester, free of extraneous inert matter and free of the inhibitory effect of toxic metals and competitive microorganisms. The objectives are:

"to accomplish a more complete conversion of biodegradable matter into an increased volume of digester gas;

"to produce digester gas with a higher proporttion of methane; and

"to reduce the digester temperature and/or hydraulic retention time required to convert solids into gas, thus to reduce the costs of digester reactor structures, related equipment, and operations.

The method of this invention includes the means for restructuring the discharged component of the microbial biomass which was created by the proliferation of anaerobic bacteria within the digester. This component of the digester sludge is recycled back to the sludge restructuring process of this invention, for disintegration and removal of detritus, thus to produce fresh nutrient BioFeedstock for supply to the digester.

The method of this invention includes the means for repetitive processing of resistant organic particulate matter that may initially survive the restructuring and anaerobic digestion processes of this invention. This is accomplished by recycling such resistant particulate matter through the sludge restructuring process of this invention to continually improve its biodegradability before each return to the digester.

A major environmental objective is to reduce pollution inherent in the land or sea disposal of, or incineration of, municipal wastewater sludges and solid wastes.

A major economic objective is to save capital and operating costs otherwise required for treatment-to-disposal of municipal wastewater sludges and solid wastes.

The foregoing objectives are obtained and organic sludge is converted to a gaseous fuel by the method comprising:

(a) hydrolyzing said sludge with hydrolytic enzymes;

(b) further hydrolyzing said sludge by alkaline hydrolysis to fluidize the organic content of said sludge;

(c) neutralizing the product of said alkaline hydrolysis by adding acid thereto;

(d) removing non-fluidized solids from said neutralized product; and

(e) anaerobically digesting said neutralized product to form a gas. In practice there will usually be a non-gas residue following the anaerobic digestion of step (e), and the non-gas residue will be recycled through steps (a) through (e) together with added raw organic sludge.

The method includes the use of an improvement upon our earlier method disclosed in U.S. 4,342,650. Our earlier method processed sludge by disintegrating it and hydrolyzing it with hydrolytic enzymes. The present method adds the feature of alkaline hydrolysis to highly fluidize the organic matter in the sludge.

If toxic metals are present in the sludge, the improved method provides for their removal. This is done by neutralizing the alkaline hydrolysis product with phosphoric acid to form insoluble metal phosphates. The insoluble phosphates can then be physically separated from the fluidized organic matter.

## DESCRIPTION OF THE DRAWINGS

Fig. 1 is a flow diagram which illustrates the method of out invention for restructuring and converting raw sludge into digester gas, a reclaimed water effluent, and residual solids concentrates.

Fig. 2 is a flow diagram which illustrates the sources of raw sludges derived from the treatment of municipal wastewater and from pretreatment of municipal solid wastes. Other sources of pretreated raw sludges are also indicated.

## DESCRIPTION OF THE PREFERRED EMBODIMENTS

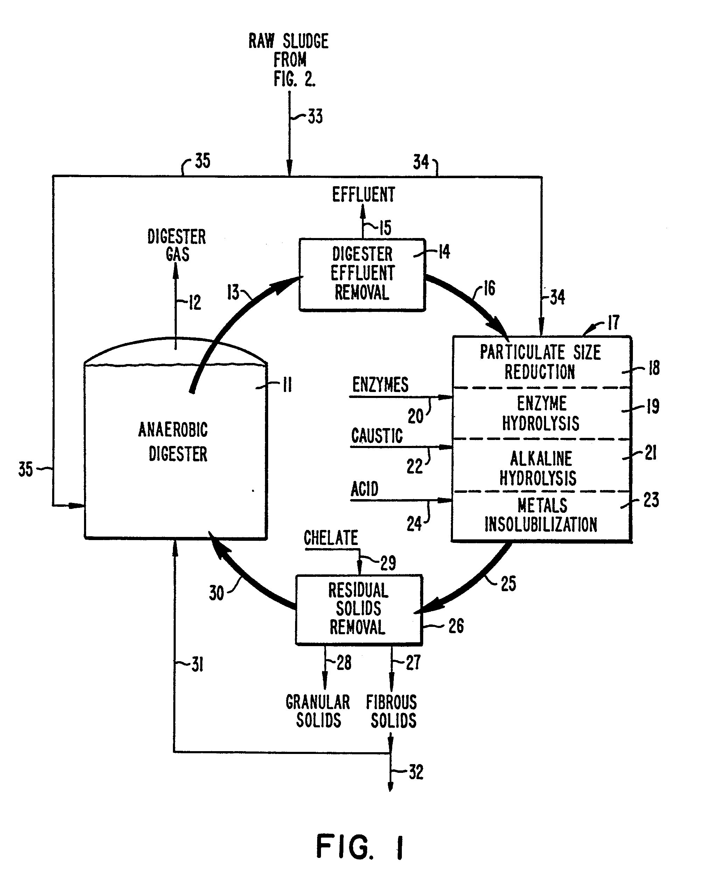

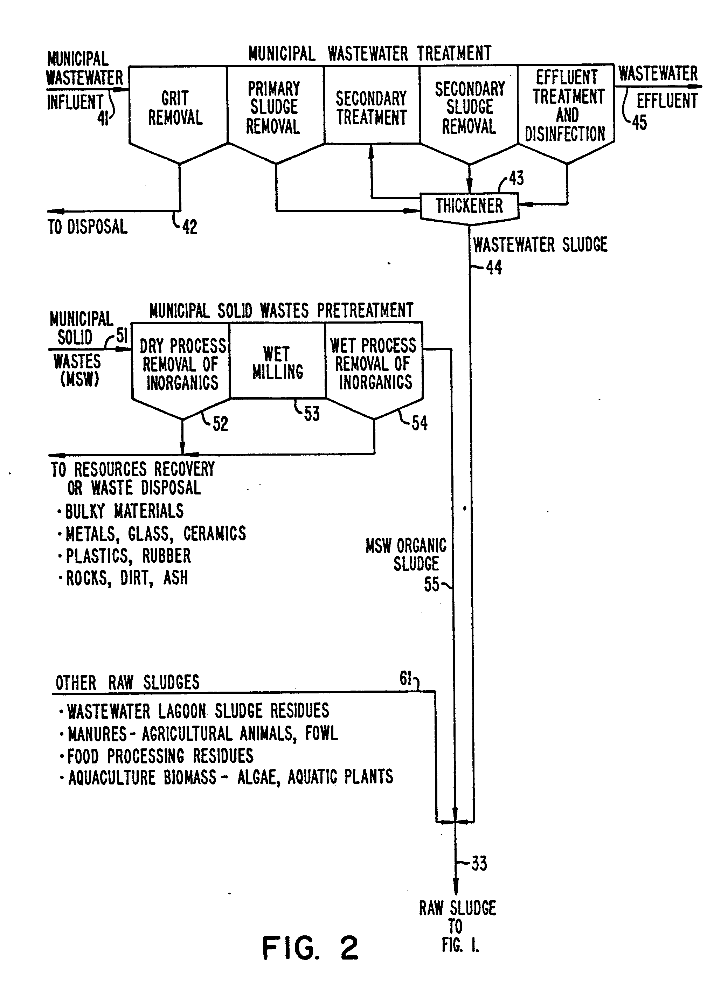

Referring to Fig. 1, there is indicated an anaerobic digester 11 in which acid-forming bacteria and methane-producing microorganisms, well known in the art, metabolize and convert organic matter into digester gas, a major fraction of which is methane fuel gas. Digester gas is removed via conduit 12. Usually such digesters include provisions for heating, mixing, and recirculating the contents.

Part of the digester sludge is removed via conduit 13, at approximately the same volumetric rate as the inflow of sludge feedstock to the digester. The discharged digester sludge, usually 2-3% solids, is treated by effluent removal equipment 14 to remove effluent water 15 (which will contain any dissolved inorganic solids), thus increasing the solids content of the sludge, preferably to the range of 5-10%. A centrifugal thickener or other well known techniques may be used, and the effluent 15 may be treated for discharge or recycled through the wastewater purification processes in a wastewater treatment plant.

Thickened digester sludge is conveyed via conduit 16 to the sludge restructuring process of our invention indicated within the rectangular area bounded by solid lines 17. Therein the physical characteristics of the sludge are restructured in a series of processing steps.

Particulate Size Reduction processing 18 may include use of grinding, comminuting, and homogenizing machines, well known in the art, to accomplish progressive particulate size reduction and dispersal of the sludge solids. Typically, the resultant size range of granular particulates in the sludge will be less than 20 microns in diameter, and the length of smaller diameter fibrous particulates will range up to about 50 microns.

The in-process sludge flows into an Enzyme Hydrolysis reactor 19 into which a solution of hydrolytic enzymes is added at 20. In the resultant reaction, contact between the enzymes and the dispersed particulate matter results in the hydrolysis of the polysaccharide gel fraction of typical waste sludges and also serves to hydrolyze or degrade particulate organic matter. The sludge should be mixed as necessary to facilitate contact between the enzymes and the particulate solids. The enzyme hydrolysis reaction may be accomplished most effectively within the pH range 6.5 to 7.2 and temperature range 20°C to 50°C maintained for six to twelve hours. The effectiveness of the hydrolytic reaction increases with temperature and time, and these factors should be adjusted to the characteristics of the raw sludge to be processed while taking economics into consideration.

The final step in hydrolyzing the organic matter is an Alkaline Hydrolysis reaction 21. A caustic chemical is added at 22, usually sodium hydroxide, in quantity sufficient to raise the alkalinity to pH 10-13, preferable to about pH 11.5. The alkaline hydrolysis reaction may be accomplished most effectively within the temperature range 20°C to 90°C maintained for six to twelve hours. The effectiveness of the hydrolytic reaction increases with temperature and time, and these factors are also taken into account in adjusting the process to the characteristics of the raw sludge to be processed.

When processing Wastewater Lagoon Sludge Residues, the sludge in process is pretreated to remove the sulfide content prior to Alkaline Hydrolysis. An inorganic acid is added to reduce the pH to about 2.5, followed by intensive aeration for about twenty minutes to remove hydrogen sulfide gas. Suitable chemicals include hydrochloric and nitric acids. This pretreatment can be accomplished economically after this typically viscous sludge has been fluidized in the enzyme hydrolysis process of our invention. Such preconditioning re-oxidizes the sludge into condition for an effective response to the metal insolubilization and inert solids removal steps of our invention.

A unique feature of the sludge restructuring process of our invention is that the combination of homogenization, enzyme hydrolysis, and alkaline hydrolysis at elevated temperature and pH, serves to destroy practically all viral, bacterial, and parasitic microorganisms.

A feature of the alkaline hydrolysis step of our invention is that at pH 10.5 or higher, practically all metals, including metals which were soluble at lower pH, are converted into metallic hydroxides. In the metals insolubilization step 23 of our invention, phosphoric acid is added at 24 to react with the metallic hydroxides to form insoluble metallic phosphates, thus preventing reversion to solution of any of the metals upon the reduction of the pH of the in-process sludge to about 7.0. A unique result of this processing is that the metals, in the form of insoluble phosphates, are nonbiodegradable and are therefore nontoxic in any subsequent contacts with microorganisms.

The resultant hydrolyzed intermediate product is conveyed via conduit 25 to Residual Solids Removal equipment 26. Therein centrifugal separators are preferably used to remove particulate matter. Such matter includes biologically-resistant Fibrous Solids produced at 27 and a Granular Solids concentrate produced at 28, including metallic phosphates, grit, ash, and biodetritus. These residual solids may be economically dewa tered and classified into relatively dry concentrates because of the minimal content of water-retaining organic solids in the hydrolyzed inflow 25.

By the optional addition of a chemical chelation agent at 29, heavy metal cations may be conditioned into forms which are easier to remove, as is well known in the art. It is usually advantageous to add the chelate chemical after removal of the fibrous solids and prior to removal of the granular solids. Other chemicals may also be added to facilitate removal or separation of the solids.

We have found it practical to remove of 50% of the heavy metals that may be present in the sludge inflow 25 to residual solids removal equipment 26. However, this processing is usually adjusted, for economic reasons, to reduce the residual insoluble metallic phosphates and other biologically inert solids only to levels which will not adversely affect digester performance. The removed granular solids concentrate 28 may be refined to recover individual metals such as cadmium, chromium, copper, nickel, or silver.

The separated fibrous solids concentrate 27 is a potentially biodegradable by-product, and all or part may be recycled to the digester via conduit 31. Subsequent processing and reprocessing through the digester 11 and sludge restructuring process 17 in the interactive circle process of our invention will convert organic fibers and other biologically resistant organic material into digester gas and residual granular solids. A certain content of fibrous substrate material in a digester is usually found to be advantageous. Any excess amount of fibrous solids may be removed from process via conduit 32.

The BioFeedstock thus produced via conduit 30 is a unique product of our invention. It contains biologically available nutrients in soluble and microparticulate form. The content of viable microorganisms, inert or nonbiodegradable materials, and heavy metals have been reduced to levels which permit more efficient operation of the digester.

The BioFeedstock is introduced into digester 11 via conduit 30, thus completing the return of the restructured biodegradable fraction of waste digester sludge 13 back to the same digester from which it originated, there to be converted into additional digester gas.

Raw sludge feedstock, as necessary to accomplish an efficient loading rate for the digester, is added into this sludge restructuring and conversion system via either or both of two alternative routes: raw sludge · from sources illustrated in Fig. 2 may be conveyed via conduits 33 and 34 and combined with thickened sludge 16 as additional inflow to the sludge restructuring process 17 of our invention. This will result in an increased flow of improved BioFeedstock 30 to the digester 11. Alternatively, raw sludge may be added via conduits 33 and 35 so that the feedstock inflow to the digester 11 will include a mixture of raw sludge 33 and BioFeedstock 30. In this event, the biologically inert fraction of matter introduced into digester 11 via conduit 35 is removed as digester sludge 13, processed through effluent removal equipment 14 and the sludge restructuring process 17 of our invention and is substantially removed by residual solids removal equipment 26.

Optimum digester performance is obtained when all of the raw sludge is first processed through the sludge restructuring and residual solids removal steps of our invention. The resultant anaerobic conversion process will proceed more efficiently since substantially all of the biologically available feedstock is in soluble or microparticulate form practically free of nonbiodegradable matter, heavy metals in toxic form, and competitive microorganisms. Thus the digester can support a larger population of productive microorganisms, and the operating conditions can be adjusted to optimize this reaction.

Typically, the pH level in the digester is maintained in the 6.5 to 8.0 range, and the temperature is usually in the range 32°-38°C; however, operation at temperatures as low as 27°C is practical for situations in which existing digester capacity permits a longer retention time. A hydraulic retention time of a few days up to ten days is usually adequate, as compared to twenty to thirty day retention times typical for municipal raw sludge digester operations.

Improved digester operating results are directly attributable to:

*more rapid conversion of organic matter into digester gas;

*conversion of a larger portion of the biodegradable organic matter into digester (typically above 90% conversion as compared to the usual 50-60% for raw sludge digestion);

*a higher percentage of methane in the digester gas (typically 75% as compared to 50-60% for digestion of raw sludge); and

6

*corresponding ly higher Btu values (up to about 800 Btu/scf as compared to approximately 600 Btu/scf for digestion of raw sludge).

Referring to Fig. 2, there is indicated a well known method for Municipal Wastewater Treatment. Wastewater influent 41 is treated to remove grit 42, then processed through conventional primary and secondary treatments to remove solids. Thickener 43 is used to remove surplus wastewater effluent sufficiently to produce a wastewater sludge 44, thickened to about 4.8% solids. After disinfection, the treated wastewater effluent is discharged at 45.

Also indicated is a well known method for the classification of Municipal Solid Wastes (MSW) 51 by dry processing 52 to remove trash, ferrous metals, oversize and undersize materials, including cans, bottles, plastic containers, rocks, ash, and sand. The remaining material is subjected to a wet milling operation 53, in which particulate size is reduced by grinding, and then to wet process removal of inorganic solids 54 by centrifugal and screen processing. Such processing is described in publications about the Resources Recovery Facility owned by Metropolitan Dade County, Florida, developed by Parsons and Whittemore, New York, and operated by Resources Recovery (Dade County), Inc. At this installation, the resulting MSW sludge 55 is dewatered and incinerated to produce steam which is converted into electric power.

The potential biochemical energy content of MSW cellulose is described by Paul F. Bente, Jr., Executive Director of the Bio-Energy Council, Arlington, Virginia, on page 178 of the Bio-Energy Directory and Handbook -1984: "The single largest source of partially pretreated cellulosic feedstocks in NSW. It is collected and available year round. From 50-75 percent of NSW has materials with 50 percent or more cellulose, whereas naturally occurring lignocellulosic materials have only about 30-45%. The high cellulose content occurs because the MSW contains much waste paper in which the cellulose portion has been both pretreated and enriched by the pulping process." The method of our invention is effective in the restructuring of such preconditioned cellulose, together with the more volatile putrescible organic fraction of the MSW, into high-energy BioFeedstock.

The potentials for converting dry processed MSW sludge into methane gas is being tested and evaluated by Waste Management, Inc. at the ReFcoM plant near Pompano Beach, Florida. This project was funded by grants from the U.S. Department of Energy and from the Gas Research Institute, Chicago, Illinois. About 50% of the biodegradable solids may be converted into digester gas containing about 52% methane in an average hydraulic retention time of about ten days. The digester sludge residue containing the remaining 50% of mostly undigested organic matter will be dewatered and incinerated to recover heat for the digesters, operated at thermophilic temperature.

Referring again to Fig. 2, the MSW sludge 55 may be more advantageously processed as raw sludge inflow 33 to the Fig. 1 Sludge Restructuring and Conversion Method of our invention. The sludge restructuring process 17 and the fibrous slids recycling feature (27 and 31) of our process combine effectively to facilitate the conversion of this predominantly cellulosic material into digester gas. A relatively low volume of granular solids concentrates are produced at 28 for disposal or for refining to recover individual metals.

In Fig. 2, there is shown all inclusively other sources of raw sludges 61 pretreated to aqueous sludge form. Generally, any raw sludge containing over 50% biodegradable organic material may be suitable for processing through the sludge restructuring and conversion method of our invention. Suitable sources of such organic waste sludges include wastewater lagoon-treatment sludge residues, agricultural manures, aquacultural biomass, and food processing residues.

All of the types of raw sludges 44, 55, and 61 may be processed individually or in combination and are introduced into process via conduit 33 according to the method of our invention.

EXAMPLE 1: A sample of BioFeedstock (obtained at conduit 30) derived from wastewater sludge was tested for its biological conversion characteristics in a laboratory scale, single-stage digester. During the initial 48 hours, digester gas was produced as a rate about eight times faster than for conversion of raw sludge.

EXAMPLE 2: A batch sample of mixed primary-secondary wastewater sludge was tested before and after the restructuring and removal of inert solids. We obtained an average 63% reduction in the concentration of the metals cadmium, chromium, copper, nickel, and lead. Initial concentrations of metals were in biologically toxic forms; residual metals in the BioFeedstock were in the form of biologically inert metallic phosphates.

Machines suitable for use in the particulate size reduction step 18 in the process of our invention include a first stage sludge comminutor; e.g., the Maz-O-Rator machines available from Robbins and Myers, Inc., Springfield, Ohio. Subsequent processing may include use of the Dispax-Reactor 3-Stage, inline disperser machines available from Tekmar Company, Cincinnati, Ohio. These have high-speed, rotor-stator generators to create dispersal and hydraulic shear forces to disintegrate organic particulate matter.

Alternative disintegration technologies may be used, such as piston-orifice, pressure-release homogenizers or ultrasonic wave energy to disperse solids in slurries, as are well known in the art.

The hydrolytic enzymes employed in the process are added as an aqueous solution prepared from crude, dehydrated, nonspecific enzyme mixtures isolated from microbial fermentation broths and subsequently dehydrated. Potency, depending on the enzyme involved, averages 50,000 international units of hydrolytic activity per gram as supplied by Worne Biotechnology, Inc., Medford, NJ. The hydrolytic enzymes may be rehydrated by dissolving 1 lb of dried enzymes in 5 gallons of water at 25°-37°C. This solution is added into the reactors in the ratio of 1 lb of dehydrated enzymes per 1000 lbs (dry weight) of biodegradable organic material inflow in the sludge to be hydrolyzed.

Hydrolytic enzymes useful for the purpose of this invention includes a wide variety of the following:

| | | |
|---|---|---|
| proteases | amylases | maltase |
| glucoamylase | dextranase | pentosanases |
| polysaccharidases | lipases | pectinases |
| protopectinases | hemicellulase | cellulases |

These hydrolytic enzymes are capable of hydrolyzing proteins, carbohydrates, fats, protopectins, pectins, hemicellulose, cellulose, and polysaccharides into soluble, low molecular weight fractions.

For the protection and conservation of the sensitive and valuable protoplasm content of the cell, we usually limit the enzyme hydrolysis reaction to about 12 hours.

For large volume installations, mixed cultures of viable, dehydrated, hydrolytic enzyme-producing microorganisms may be employed as an inoculant. Potencies are typically about one million fungal spores per gram and about five billion viable bacteria per gram as supplied by Worne Biotechnology, Inc., Medford, New Jersey.

To establish a viable growing mixed culture capable of secreting the required quantities of enzymes, one pound of the inoculant is added to a 1,000 gallon stirred fermenter containing 750 gallons of sterile media of a type meeting the growth requirements of the specific microbial strains being cultured and designed to insure maximum enzyme production. Aerobic microbial cultures are provided with sterile air at a rate which gives a dissolved oxygen of approximately 2 ppm. Depending on the environmental requirements of the culture, the temperature is maintained between 20°C and 50°C, with an average of 25°C to 37°C. The media is adjusted to pH 4.5 to 7.5, the optimum being 6.5 to 7.0, depending on the cultures being grown. Anaerobic cultures used in the process receive identical treatment without the aeration. In about 24 to 36 hours, bacteria in the finished liquid culture will have a minimum cell concentration of 3 to 5 billion microorganisms per milliliter and will have reached the maximum level of enzyme production. Due to slower growth rates, fungi will require a residence time of 3 to 5 days to reach maximum enzyme production.

The size of the vessel or vessels needed to grow the cultures and produce the enzymes averages 1,000 gallons per 250,000 gallons of liquid sludge slurry containing 10% solids.

The spent biomass should be separated from the enzyme rich media as soon as possible by filtration or centrifugal separation. After separation the biomass is added to the raw sludge feedstock 34 for restructuring and conversion according to the process of our invention. About 90% of each batch of the enzyme rich media may be added to the enzyme hydrolysis reactor 19 at the rate of 50 gallons per 1,000 gallons of sludge slurry having 10% solids.

Ten percent of each enzyme batch, before separation of the biomass, may be retained for use as an inoculant for subsequent culture batches up to a total of five such extension cultures, after which a new series of cultures should be started with a fresh supply of dehydrated microorganisms as the inoculant.

Thus, in large installations a microbial inoculant, plus its exocellular enzymes, may be produced economically on site from relatively small amounts of commercially produced dehydrated enzyme-producing microorganisms.

Enzyme-producing microorganisms useful for the purpose of this invention include:

| | |
|---|---|
| Athelia sp. | Myricoccum sp. |
| Alternaria sp. | Thermonospora sp. |
| Arthrobotrys sp. | Thermopolyspora sp. |
| Arthrographis sp. | Xanthomonas sp. |
| Beauveria sp. | Aspergillus sp. |
| Botrytis sp. | Acremonium sp. |
| Cephalosporium sp. | Memnoniella sp. |
| Chaetomium sp. | Metarrhizium sp. |
| Chrysosporium sp. | Monascus sp. |
| Cladosporium sp. | Mucor sp. |
| Conidiobolus sp. | Mortierella sp. |
| Coprinus sp. | Myrothecium sp. |
| Cytophaga sp. | Paecilomyces sp. |
| Endothia sp. | Pellicularia sp. |
| Entomophthora sp. | Penicillium sp. |
| Eupenicillium sp. | Polyangium sp. |
| Fomes sp. | Polyporus sp. |
| Fusarium sp. | Preussia sp. |
| Gliocladium sp. | Pythium sp. |
| Gliomastix sp. | Rhizomucor sp. |
| Acinetobacter sp. | Rhizopus sp. |
| Bacillus sp. | Sporoboromyces sp. |
| Achromobacter sp. | Serratis sp. |
| Arthrobacter sp. | Stachybotrys sp. |
| Corynebacterium sp. | Trichoderma sp. |
| Cellulomonas sp. | Verticillum sp. |
| Clostridium sp. | Candida sp. |
| Micrococcus sp. | Saccharomyces sp. |
| Streptomyces sp. | Saccharomycopsis sp. |
| Micromonospora sp. | Torula sp. |
| Pseudomonas sp. | Yarrowia sp. |
| Nocardia sp. | Mycrobacterium sp. |
| Thermoactinomyces sp. | |

Depending on the characteristics of the raw sludges available for restructuring, caustic chemicals 22 other than sodium hydroxide may be employed for the alkaline hydrolysis step 21 of our invention. Such alternative caustics may include potassium hydroxide, potassium carbonate, and sodium carbonate.

For restructuring raw sludges having relatively low contents of heavy metals, acids other than phosphoric acid may be used alternatively at 24 for pH adjustment, as is well known in the art.

A method suitable for the optional chemical chelation reaction described as part of the residual solids removal process 26 of our invention is described by Wing, et al. in U.S. Pat. No. 3,978,286. This method employs the chelating capacity of insoluble cross-linked starch xanthates to remove heavy metals in an aqueous solution by contact adsorption. Alternatively, other methods may be used for removal of metals, including chemical and electrical methods described in the literature for use with industrial effluents.

Centrifuge machines well known in the art may be used for the digester sludge thickener 14 and for residual solids removal 26. Suitable high-speed, bowl-scroll machines for continuous flow operation are available from the Sharples-Stockes Division of Pennwalt Corporation, Warminster, Pennsylvania, and from Bird Machine Company, Inc., So. Walpole, Massachusetts. Alternatively, suitable filtration equipment may be used, including membrane filters produced by Dorr-Oliver, Incorporated, Stamford, Connecticut, and others.

For some applications, the specific arrangement of the sludge restructuring process 17 may be modified or adapted to the characteristics of the raw sludge to be processed. For instance, some of the raw sludges 61 do not contain an undesirable level of heavy metals. Alternatively, where two dissimilar types of raw sludges are to be processed, two specifically adapted installations of sludge restructuring equipment 17 and residual solids removal equipment 26 may be used to produce optimized BioFeedstocks 30 for inflow to the digester 11.

In retrofitting modern municipal wastewater treatment plants with this Sludge Restructuring and Conversion Method, the digester 11 will usually be the existing conventional high-rate digester(s), typically with capacities exceeding one million gallons and designed for hydraulic retention intervals of about 20-30 days. The conventional loading rate of the digester installation may be increased by restructuring part of the raw sludge inflow into improved BioFeedstock 30, or variable-rate processing may be used as needed to compensate for seasonal or shock-load changes in the rate that raw sludge is required to be treated.

In other installations, particularly where 100% of the raw sludge inflow 33-34 is processed through the sludge restructuring 17 and residual solids removal 26 steps of our invention, improved types of relatively small but high performance digesters, well known in the art, may be used. For such applications, it may be advantageous to utilize the maximum potentials of our sludge restructuring technology to produce solubilized BioFeedstock 30. As an example to illustrate these potentials, the Biothane Corporation of Camden, New Jersey, reports digester conversion of over 75% of nutrients into digester gas containing over 80% methane with hydraulic retention times of less than twelve hours. Capital cost and operational economies may be achieved due to the relatively small size of such high performance anaerobic digesters.

The digester fermentation and microbial growth are dependent on the optimal supply of nutrients. The bacteria have simple nutrient requirements; and the various organic materials required by some species, such as B vitamins, a small number of amino acids, or fatty acids, are supplied by other bacterial species. Inorganic minerals are usually the only other nutrients required. Most of the crude substrates utilized for methane fermentation contain sufficient minerals to satisfy the nutrient requirements for growth of the microorganisms; however, supplementation with relatively minor amounts of nitrogen, phosphorus, and other nutrients may be advantageous.

All or part of the unique BioFeedstock product of our invention, available at conduit 30, may be used alternatively as a high performance liquified fertilizer, usually distributed in irrigation water. This biologically available nutrient may also be useful in hydroculture crop production or in the production of algae or aquatic plants. More complete information about such alternative uses has been published in our U.S. patents No. 4,267,049 and No. 4,432,650.

For purposes of clarity and understanding, the foregoing improved Sludge Restructuring and Conversion Method has been described in some detail by way of illustration and example; however, it is to be understood that certain additions, modifications, and omissions may be practiced within the spirit of the invention as limited only by the scope of the appended claims.

## Claims

1. in the method for converting organic sludge into a useful substance by disintegrating the organic solids in the sludge into organic particulate matter, and hydrolyzing the particulate matter with hydrolytic enzymes, the improvement comprising the step of further hydrolyzing the enzyme hydrolyzed organic particulate matter to a fluid form by adding sufficient base to establish a hydrolyzing alkaline pH.

2. The improved method in accordance with claim 1, wherein the sludge is adjusted to a pH of about 6.5-7.2 during said hydrolysis with hydrolytic enzymes and the temperature is about 20-50°C.

3. The improved method in accordance with claim 1, wherein sufficient base is added to adjust the pH to about 10-13 and the temperature is adjusted to about 20-90°C.

4. The improved method in accordance with claim 3, wherein base is added to adjust the pH to about 11-12 and said further hydrolysis step is executed for about 6-12 hours, whereby said organic matter is fluidized and substantially all viral, bacterial and parasitic organisms are destroyed.

5. The improved method in accordance with claim 1, and including the step of neutralizing the further hydrolyzed matter with acid.

6. The improved method in accordance with claim 5, wherein said organic particulate matter contains metals and said neutralizing is executed by adding phosphoric acid to form insoluble metal phosphates.

7. The improved method in accordance with claim 6, and further including the step of separating said insoluble metal phosphates from said neutralized matter.

8. The improved method in accordance with claim 7, wherein solids removal is facilitated by the addition of a chelating agent.

9. The improved method in accordance with claim 6, including the step of separating solids following neutralization, wherein fibers are removed first and thereafter granular solids are removed.

10. A method for converting organic sludge to a gaseous fuel comprising:

(a) hydrolyzing said sludge with hydrolytic enzymes:

(b) further hydrolyzing said sludge by alkaline hydrolysis to fluidize the organic content of said sludge;

(c) neutralizing the product of said alkaline hydrolysis by adding acid thereto;

(d) removing non-fluidized solids from said neutralized product; and

(e) anaerobically digesting said neutralized product to form a gas.

11. The method for converting organic sludge in accordance with claim 10, wherein there is a non-gas residue following the anaerobic digestion of step (e), and wherein said non-gas residue is recycled through steps (a) through (e).

12. The method for converting organic sludge in accordance with claim 11, including the step of reducing the liquid content of said non-gas residue before it is recycled.

13. The method for converting organic sludge in accordance with claim 10, wherein raw organic sludge is combined with said neutralized product in the anaerobic digestion of step (e).

14. The method for converting organic sludge in accordance with claim 11, wherein raw organic sludge is combined with said non-gas residue and recycled therewith.

15. The method for converting organic sludge in accordance with claim 10, wherein said organic sludge contains heavy metals and the acid added in step (c) is phosphoric acid, whereby said heavy metals are converted to insoluble phosphates and are removed as granular solids in step (d).

FIG. 1

## MUNICIPAL WASTEWATER TREATMENT

MUNICIPAL
WASTEWATER
INFLUENT
41

| GRIT REMOVAL | PRIMARY SLUDGE REMOVAL | SECONDARY TREATMENT | SECONDARY SLUDGE REMOVAL | EFFLUENT TREATMENT AND DISINFECTION |

WASTEWATER
EFFLUENT
45

43

THICKENER

TO DISPOSAL    42

WASTEWATER SLUDGE
44

## MUNICIPAL SOLID WASTES PRETREATMENT

MUNICIPAL
SOLID
WASTES
(MSW)
51

| DRY PROCESS REMOVAL OF INORGANICS | WET MILLING | WET PROCESS REMOVAL OF INORGANICS |

52    53    54

TO RESOURCES RECOVERY
OR WASTE DISPOSAL
• BULKY MATERIALS
• METALS, GLASS, CERAMICS
• PLASTICS, RUBBER
• ROCKS, DIRT, ASH

MSW ORGANIC
SLUDGE
55

OTHER RAW SLUDGES                                           61

• WASTEWATER LAGOON SLUDGE RESIDUES
• MANURES – AGRICULTURAL ANIMALS, FOWL
• FOOD PROCESSING RESIDUES
• AQUACULTURE BIOMASS – ALGAE, AQUATIC PLANTS

33

RAW SLUDGE
TO
FIG. I.

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 342 650 (L.G. ERICKSON et al.)<br><br>* Column 5, line 51 - column 6, line 51; column 7, lines 10-21; column 10, lines 37-49; column 14, claims 1,2,4 * | 1-4,8 10,13 14 | C 02 F 11/00<br>C 02 F 3/28<br>C 02 F 9/00 |
| | --- | | |
| Y | US-A-3 622 507 (A. PASVEER)<br><br>* Column 1, lines 60-66; column 2, lines 37-41; column 5, lines 29-51; figure 1 * | 1-4,8 10,13 14 | |
| | --- | | |
| A | US-A-4 022 665 (INSTITUTE OF GAS TECHNOLOGY)<br>* Column 5, lines 33-48; column 7, claims 1,4 * | 1-5,10 ,13,14 | |
| | --- | | TECHNICAL FIELDS SEARCHED (Int. Cl.4) |
| A | EP-A-0 019 733 (KLÖCKNER-HUMBOLDT-DEUTZ)<br>* Page 12, lines 17-37 * | 11,12 14 | C 02 F |
| | --- | | |
| A | CHEMICAL ABSTRACTS, vol. 103, no. 12, 23rd September 1985, page 291, abstract no. 92428s, Columbus, Ohio, US; & JP-A-60 71 087 (DEERE AND CO.) 22-04-1985 | 6,7 | |
| | ----- | | |

The present search report has been drawn up for all claims

| Place of search | Date of completion of the search | Examiner |
|---|---|---|
| THE HAGUE | 29-01-1987 | TEPLY J. |